# EUROPÄISCHE PATENTSCHRIFT

(11) **EP 2 106 115 B1**
(45) Veröffentlichungstag und Bekanntmachung des Hinweises auf die Patenterteilung: **23.02.2011**
(21) Anmeldenummer: 08075244.7
(22) Anmeldetag: 28.03.2008
(51) Int. Cl.: H04M 11/06, H04L 29/06

(54) **Verfahren zum Betreiben eines Kommunikationsgerätes und Kommunikationsgerät hierfür**
Method for operating a communication device and communicating device therefor
Procédé destiné au fonctionnement d'un appareil de communication et appareil de communication correspondant

(43) Veröffentlichungstag der Anmeldung: 30.09.2009
(73) Patentinhaber: Cinterion Wireless Modules GmbH, 81669 München (DE)
(72) Erfinder: Günther, Frank, 13581 Berlin (DE)
(74) Vertreter: Eisenführ, Speiser & Partner

(56) Entgegenhaltungen:
- EP-A- 1 494 387
- US-B1- 6 768 749

## Beschreibung

Die Erfindung betrifft ein Verfahren zum Betreiben eines Kommunikationsgerätes mit einer Datenverbindungsschicht und einem Point-to-Point-Protokoll mit einem PPP-Rahmen nach dem Oberbegriff des Anspruchs 1 und ein Kommunikationsgerät nach dem Oberbegriff des Anspruchs 5.

Die Hauptanwendung des PPP und der auf dieser Grundlage arbeitenden Kommunikationsgeräte liegt auf dem Gebiet so genannter IP-Netzwerke. Dies können beispielsweise das Internet, aber auch ein privates Intranet sein. Unter Verwendung spezieller Oberflächen und Schnittstellen, beispielsweise RS232, IRDA, Bluetooth oder Comport über USB, wird ein in diesen Netzwerken anfallender Datenstrom seriell übertragen. Für diese Serialisierung hat sich das paketorientierte PPP-Protokoll als allgemeiner Standard durchgesetzt. Ein auf der Grundlage des PPP arbeitendes Kommunikationsgerät kann beispielsweise ein Modem sein.

Die aus dem Stand der Technik bekannte Struktur des PPP bringt es mit sich, dass derartige Geräte immer dann, wenn eine Datenverbindung besteht, die dabei hardwareseitig vorhandene Schnittstelle vollständig besetzen. Das Kommunikationsgerät befindet sich in diesem Fall in einem Zustand, der als Datenmodus bezeichnet wird. Zusätzliche Befehle, die nicht Teil des übertragenen Datenstromes sind, können unter diesen Bedingungen nicht an das Kommunikationsgerät gesendet werden. Ein Senden zusätzlicher Befehle ist jedoch in der Regel immer dann notwendig, wenn zum Beispiel so genannte AT-Befehle übermittelt werden müssen, die zum Überprüfen und Verifizieren einer Link-Qualität, zum Anzeigen von Netzwerkinformationen über Feldstärken oder Netzbetreiber, zum Feststellen eines Ladezustandes eines Akkumulators, zum Beenden einer Verbindung und dergleichen weitere Überwachungs- und Steuerungsfunktionen erforderlich sind.

Darüber hinaus ist es vor allem bei Kommunikationsgeräten, die eine Funktion als Drahtlosmodem erfüllen, von großer Bedeutung, dass neben der Datenübertragung zusätzliche Dienste oder Applikationen realisiert werden können. Dafür muss diesen Diensten parallel zur laufenden Datenübertragung ein Zugriff auf die Hardware des Kommunikationsgerätes ermöglicht werden. Dies ist beispielsweise bei Anwendungen der Fall, die dazu dienen sollen, jederzeit Sprachrufe abzusetzen oder entgegenzunehmen, Kurznachrichten (SMS) zu senden oder zu empfangen und damit weitere Funktionen des Kommunikationsgerätes zu nutzen.

Aus dem Stand der Technik sind dazu bereits einige Lösungen bekannt: Bei einer ersten Vorgehensweise wird das Kommunikationsgerät von dem Datenmodus in einen so genannten Befehlsmodus gesetzt. Die Datenübertragung wird dabei unterbrochen und das Kommunikationsgerät steht dann im Befehlsmodus der aktiven Anwendung zur Verfügung. Dieses Umschalten erfolgt in der Regel durch spezielle Zeichenfolgen oder Steuersignale. Bei diesen Umschaltvorgängen wird jedoch der Datenfluss über das Kommunikationsgerät erheblich verlangsamt. Außerdem wird das zeitliche Verhalten von Protokollen auf höheren Abstraktionsschichten negativ beeinflusst.

Um Befehle parallel zur bestehenden Datenverbindung an das Kommunikationsgerät zu senden, werden daher zusätzliche physikalische Schnittstellen verwendet, über die zum einen die Datenverbindung und zum anderen das Übertragen der Befehle abgewickelt wird. Zweckmäßigerweise werden Multiplexerprotokolle verwendet, mit denen sich mehrere logische Kanäle auf einer physikalischen Schnittstelle am Kommunikationsgerät bereitstellen lassen, über die mehrere Anwendungen Befehle an das Kommunikationsgerät senden können. Grundsätzlich muss aber auch bei diesen technischen Lösungen der Datenmodus des Kommunikationsgeräts zumindest temporär beendet und somit die bestehende Datenverbindung abgebaut werden, damit die im Befehlsmodus arbeitenden Anwendungen und Dienste auf das Kommunikationsgerät zugreifen können.

Zudem ist die Implementierung und Integration des Multiplexerprotokolls oft mit zusätzlichen Problemen verbunden. Für die Erstellung eines derartigen Protokolls müssen teilweise erhebliche Entwicklungsarbeiten geleistet werden. Ein Multiplexerprotokoll stellt außerdem hohe Anforderungen an die im Kommunikationsgerät vorhandenen Speicher und Prozessoren. Oftmals kann das Multiplexerprotokoll nur proprietär realisiert werden.

Aus US 6,768,749 B1 ist die Möglichkeit bekannt, zwischen zwei Modems eine Kommunikationsverbindung mit einem DualChannel-Protokoll vorzusehen, wobei ein erster Kanal für Daten und ein zweiter Kanal für Befehle und Statusinformationen vorgesehen ist. Dazu werden existierende Kommunikationsprotokolle über eine Initialisierung ausgesetzt und über einen Detektor die Bedingungen des DualChannel-Protokolls geprüft.

In EP 1 494 387 A1 ist offenbart, ein Modem in einem ersten Befehls-Modus und in einem zweiten Daten-Modus zu betreiben unter Nutzung eines IP-Protokolls, wobei ein zusätzliches QUIP-Protokoll (Queried UDP Information Protocol) in einem UDP Paket verpackt ist.

Es besteht somit die der Erfindung zugrundeliegende Aufgabe, ein Verfahren anzugeben, mit denen die beschriebenen Nachteile vermieden werden können und auch Kommunikationsgeräte mit geringeren Prozessorleistungen und Speicherressourcen für einen echten Parallelbetrieb hergerichtet werden und betrieben werden können, ohne die Qualität der Datenverbindung nennenswert zu beeinflussen. Es soll vor allem möglich sein, den Datenmodus des Kommunikationsgerätes auch dann aufrecht zu erhalten, wenn eine im Befehlsmodus arbeitende Anwendung auf das Kommunikationsgerät zugreifen soll.

Die Lösung der Aufgabe erfolgt mit einem Verfahren zum Betreiben eines Kommunikationsgerätes mit den Merkmalen des Anspruchs 1. Hinsichtlich des Vorrichtungsaspektes erfolgt die Lösung der Aufgabe mit einem Kommunikationsgerät mit den Merkmalen des Anspruchs 5. Die Unteransprüche geben zweckmäßige bzw. vorteilhafte Ausgestaltungen des erfindungsgemäßen Verfahrens bzw. des Kommunikationsgerätes an.

Das erfindungsgemäße Verfahren zeichnet sich durch ein Betreiben eines in den PPP-Rahmen eingefügten, mittels eines Identifikators separierbaren Gerätesteuerungsprotokolls aus. Das Gerätesteuerungsprotokoll stellt mindestens einen logischen Kanal zwischen einer Applikationsschicht und einer physikalischen Schicht des Kommunikationsgerätes bereit.

Erfindungsgemäß wird somit der PPP-Rahmen des PPP-Protokolls auf der Ebene der Datenverbindungsschicht um ein zusätzliches Protokoll erweitert. Das als Gerätesteuerungsprotokoll bezeichnete Zusatzprotokoll stellt auf der Ebene des PPP, d.h. als Teil der Point-to-Point-Datenübertragung im Datenmodus, einen logischen Kanal bereit, der für eine Anwendung aus der Applikationsschicht reserviert ist und dieser einen Zugriff auf die physikalische Schicht, also die Hardware, des Kommunikationsgerätes ermöglicht.

Das Gerätesteuerungsprotokoll ist somit einerseits ein Teil der im Datenmodus betriebenen PPP-Kommunikation, andererseits stellt das Gerätesteuerungsprotokoll ein Zugriffsfenster für Anwendungen zur Verfügung, die normalerweise nicht im Daten-modus auf dem Kommunikationsgerät ausführbar sind. Deren Befehle werden gleichsam "Huckepack" im PPP-Rahmen übertragen. Bei einer zweckmäßigen Ausgestaltung des Verfahrens erfolgt mittels des Gerätesteuerungsprotokolls eine Instanzierung von mindestens zwei logischen Kanälen zum physikalischen Zugriff von mindestens einer ersten Applikation und mindestens einer zweiten Applikation aus der Applikationsschicht auf das Kommunikationsgerät. Jeder der Applikationen wird dadurch je ein eigener logischer Kanal bereitgestellt, der gesondert angesprochen werden kann.

In einer vorteilhaften Ausgestaltung des Verfahrens stellt das Gerätesteuerungsprotokoll mindestens eine virtuelle serielle Schnittstelle für eine Applikation bereit. Bei einer derartigen Ausgestaltung kann die jeweils zugreifende Applikation den logischen Kanal des Gerätesteuerungsprotokolls wie eine herkömmliche serielle Schnittstelle nutzen.

Bei einer Ausführungsform ist die mindestens eine erste Applikation ein GPRS- oder UMTS-Datendienst und die mindestens eine zweite Applikation ein Dienst zum Übertragen von Sprach- und Kurznachrichten. Dabei führt einer der beiden Dienste eine Datenübertragung über die vorhergehend erwähnte virtuelle serielle Schnittstelle aus.

Ein Kommunikationsgerät zum Ausführen von Kommunikationsvorgängen mittels eines Point-to-Point-Protokolls mit einem PPP-Rahmen zeichnet sich erfindungsgemäß durch mindestens eine virtuelle serielle Schnittstelle aus. Diese wird durch ein in den PPP-Rahmen integriertes Gerätesteuerungsprotokoll mit mindestens einem logischen Kanal für einen Zugriff von Applikationen in einer Applikationsschicht auf Einheiten einer physikalischen Schicht des Kommunikationsgerätes gebildet. Der logische Kanal der jeweiligen virtuellen Schnittstelle ist instanziert. Dadurch ist über jede virtuelle serielle Schnittstelle ein jeweils unabhängig ausführbarer Zugriff auf die physikalische Schicht des Kommunikationsgerätes möglich.

Über die mindestens eine virtuelle serielle Schnittstelle ist bei einer Ausführungsform des Kommunikationsgerätes eine DialUP-, eine Kurznachrichten-, eine Telefonie- und/oder eine Fax-Applikation ausführbar. Bei einer weiteren Ausführungsform des Kommunikationsgerätes ist über die mindestens eine virtuelle serielle Schnittstelle eine Sprach- und/oder eine Kurznachrichten-Applikation ausführbar.

Bei einer ersten Ausführungsform ist das Kommunikationsgerät ein drahtgebundenes und/oder drahtloses Modem. Bei einer weiteren Ausführungsform ist das Kommunikationsgerät ein Persönlicher Digitaler Assistent zur Verwendung in einem GPRS und/oder UMTS/HSDPA-Datendienst.

Das Verfahren bzw. das Kommunikationsgerät sollen nachfolgend anhand von Ausführungsbeispielen näher erläutert werden. Es werden für gleiche bzw. gleich wirkende Komponenten die gleichen Bezugszeichen verwendet. Zur Verdeutlichung dienen die Figuren 1 bis 6. Es zeigt
Fig. 1 ein für das Anwendungsgebiet des Verfahrens übliches Abstraktionsschichten-Modell,
Fig. 2 ein Schichtenmodell für ein bekanntes Umschaltverfahren zwischen einem Datenmodus und einem Befehlsmodus des Kommunikationsgerätes,
Fig. 3 ein Schichtenmodell für ein bekanntes Verfahren mit physikalischen Schnittstellen zwischen einer Applikationsschicht und dem Kommunikationsgerät,
Fig. 4 ein Schichtenmodell für ein bekanntes Verfahren unter Verwendung eines Multiplexerprotokolls,
Fig. 5 ein Schichtenmodell mit einem PPP-Rahmen und einem zusätzlich eingefügten Gerätesteuerungsprotokoll für einen logischen Kanal gemäß einer ersten Ausführung der Erfindung und
Fig. 6 ein Schichtenmodell mit einem PPP-Rahmen und mehreren zusätzlich eingefügten Gerätesteuerungsprotokollen mit mehreren logischen Kanälen gemäß einer weiteren Ausführung der Erfindung.

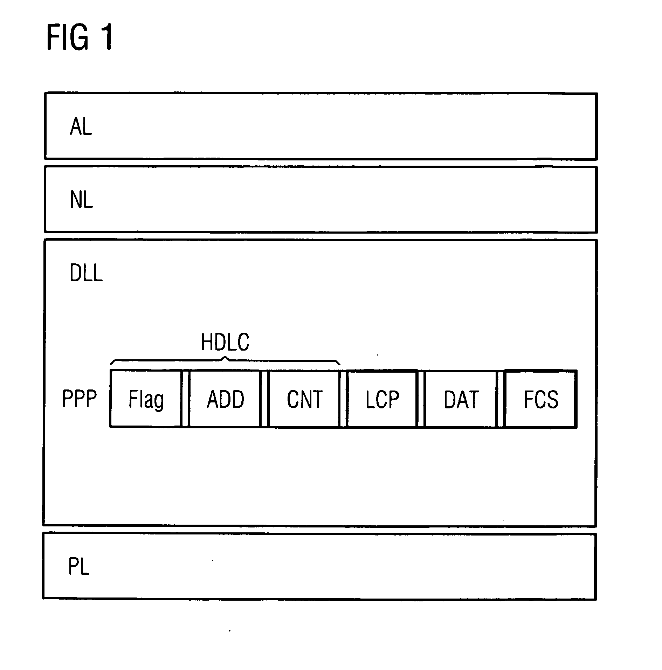

Fig. 1 zeigt das zugrundeliegende Modell der auf dem Kommunikationsgerät ablaufenden Datenübertragung. Das Modell weist eine Reihe von Abstraktionsschichten auf. Eine in der Darstellung höher gelegene Schicht bildet eine Virtualisierung der jeweils darunter liegenden tieferen Schicht. Diese Virtualisierung ermöglicht es Prozessen oder Anwendungen in der jeweils höheren Schicht, auf Ressourcen der tieferen Schicht zuzugreifen, ohne dass die Spezifikationen der Komponenten oder Prozesse in der tieferen Schicht bekannt sein müssen.

Die tiefste Schicht bilden die unmittelbar vorliegenden Hardware- und Firmwarekomponenten des Kommunikationsgerätes bzw. der unmittelbar über das Kommunikationsgerät geleiteten Signale. Diese Schicht wird als physikalische Schicht oder Physical Layer PL bezeichnet.

Eine Abstraktionsstufe darüber ist eine Datenverbindungsschicht DLL (Data Link Layer) angeordnet. Sie enthält als wichtigste Komponente grundlegende Kommunikationsprotokolle und Schnittstellen für einen Zugriff höherer Prozesse oder Anwendungen auf die in der physikalischen Schicht PL vorhandenen Funktionalitäten des Kommunikationsgerätes.

Im hier vorliegenden Fall enthält die Datenverbindungsschicht DLL ein Point-to-Point-Protokoll PPP. Das PPP ermöglicht die Übertragung verschiedener höherer Netzwerkprotokolle wie insbesondere TCP/IP, IPX oder AppleTalk. Der Aufbau des PPP ist in der RFC 1661 standardisiert. Das PPP hat sich als allgemeines Kommunikationsprotokoll im Internet durchgesetzt und dient insbesondere zum Ausführen von Einwahlvorgängen zwischen Nutzerendgeräten auf einem Internetprovider.

Das PPP besteht aus einer definierten Signalfolge, die als PPP-Rahmen oder PPP-Frame bezeichnet wird. Die ersten drei Signale des PPP-Rahmens sind zu einem von der ISO normierten Netzprotokoll kompatibel, das als High Level Data Link Control HDLC bezeichnet wird. Sie bestehen aus einer Begrenzung Flag, einer Adresse ADD und einer Steuerung CNT. Die Steuerung wird auch als HDLC-Control bezeichnet. Sowohl Flag, ADD und CNT weisen jeweils eine Länge von 1 Byte auf. Diese Felder tragen in der Regel fest vorgegebene Werte.

Der darauf folgende Bestandteil des PPP-Rahmens wird als Verbindungssteuerungs-Protokoll oder Link Control Protocol LCP bezeichnet. Das LCP gibt den Code für die Paketart der übertragenen Nutzdaten an. Ein herkömmliches LCP weist eine Länge von 1 bis 2 Byte auf. Den Werten des LCP sind eine Reihe von Protokollarten zugeordnet, beispielsweise ein jeweils standardisierter Wert für das Internetprotokoll IP, für ein Compression Control Protocol CCP, ein IP Control Protocol IPCP, ein Password Authentification Protocol PAP oder ein Challenge Handshake Authentification Protocol CHAP.

Das nächste Glied des PPP-Rahmens weist eine variable Länge auf und ist für Nutzdaten DAT reserviert, die in dem Paket übertragen werden. Die Länge des DAT-Gliedes ist jeweils durch den Wert des LCP-Feldes festgelegt und kann bei Bedarf aufgefüllt werden. Das DAT-Glied wird auch als Payload bezeichnet.

Das letzte Glied des PPP-Rahmens bildet die HDLC-Prüfsumme FCS. Diese ergibt sich aus einer zyklischen Redundanzprüfung der Glieder ADD, CNT, LCP und DAT. An das Glied FCS schließt sich dann das Flag-Glied des im Datenfluss nachfolgenden PPP-Rahmens an.

Die über der Datenverbindungsschicht DLL angeordnete Abstraktionsschicht wird durch eine Netzwerkschicht oder einen Network Layer NL gebildet. Die Netzwerkschicht beinhaltet grundlegende Kommunikationsprotokolle, die auf unterschiedliche Netzwerkarchitekturen angepasst sind. Ein Beispiel hierfür ist das TCP/IP-Protokoll, das einen Standard für die Kommunikation in weltweiten Datennetzen bildet, oder auch das User Datagram Protocol UDP.

Die höchste Abstraktionsschicht wird durch eine Applikationsschicht AL gebildet. Diese umfasst einerseits typische Nutzeranwendungen wie Browser, Update Manager oder Server, aber auch Authentifizierungs- und Setup-Programme. Die Applikationsschicht bildet eine Nutzerschnittstelle, mit der ein Nutzer die tiefer liegenden Funktionalitäten der Datenübermittlung am Kommunikationsgerät nutzen und auf diese zugreifen kann.

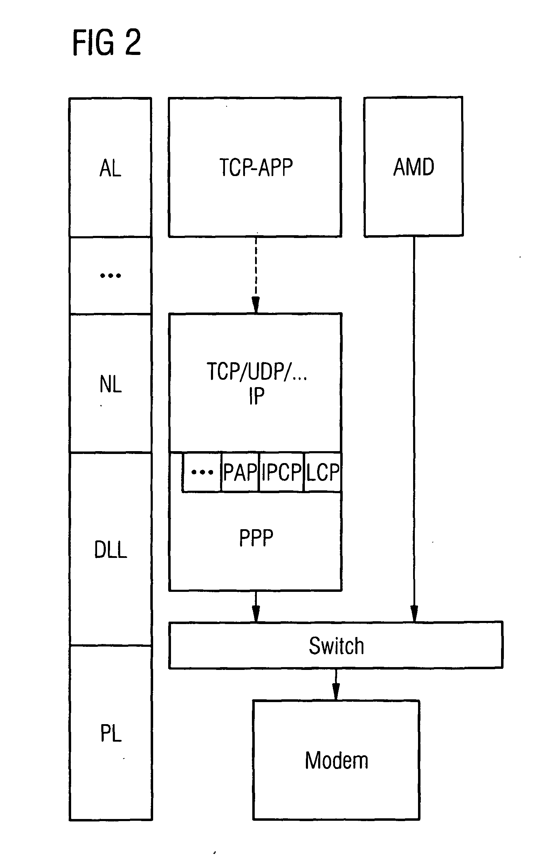

Fig. 2 zeigt ein Umschaltverfahren zwischen einem Datenmodus und einem Befehlsmodus des Kommunikationsgerätes im Modell der Abstraktionsschichten. Auf der Ebene der Physikalischen Schicht PL ist ein Kommunikationsgerät MODEM vorgesehen. Mittels einer Umschaltfunktion SWITCH wird das Kommunikationsgerät entweder im Datenmodus oder im Befehlsmodus betrieben. Die Umschaltfunktion SWITCH gehört teilweise der Physikalischen Schicht PL an, sie ist also durch gewisse Hardware- oder Firmwarekomponenten im Kommunikationsgerät realisiert. Teilweise ist sie aber auch ein Teil der Datenverbindungsschicht DLL und dort neben dem bereits beschriebenen PPP-Protokoll implementiert.

Im Datenmodus ist auf dem Kommunikationsgerät MODEM ausschließlich das PPP-Protokoll mit der darüber liegenden Netzwerkschicht NL und den darin ablaufenden Protokollen TCP/IP oder UDP aktiv. Eine Applikation TCP-AP, beispielsweise ein Internet-Browser oder ein E-Mail-Client, aus der Applikationsschicht AL greifen in diesem Modus in vollem Umfang auf die Funktionalitäten der tieferen Schichten bzw. die Hardwarefunktionen des Kommunikationsgerätes zu.

Zum Umschalten von dem Datenmodus in einen Befehlsmodus wird die Umschaltfunktion SWITCH durch ein Programm AMD aktiviert. Das Programm AMD verwaltet die Datenverbindungen für Anwendungen, es kann beispielsweise ein Authentifizierungsprogramm, ein Konfigurationsprogramm, ein Verbindungs- oder ein Setup-Programm sein. Am Kommunikationsgerät wird dadurch der Datenmodus beendet und der Befehlsmodus aktiviert.

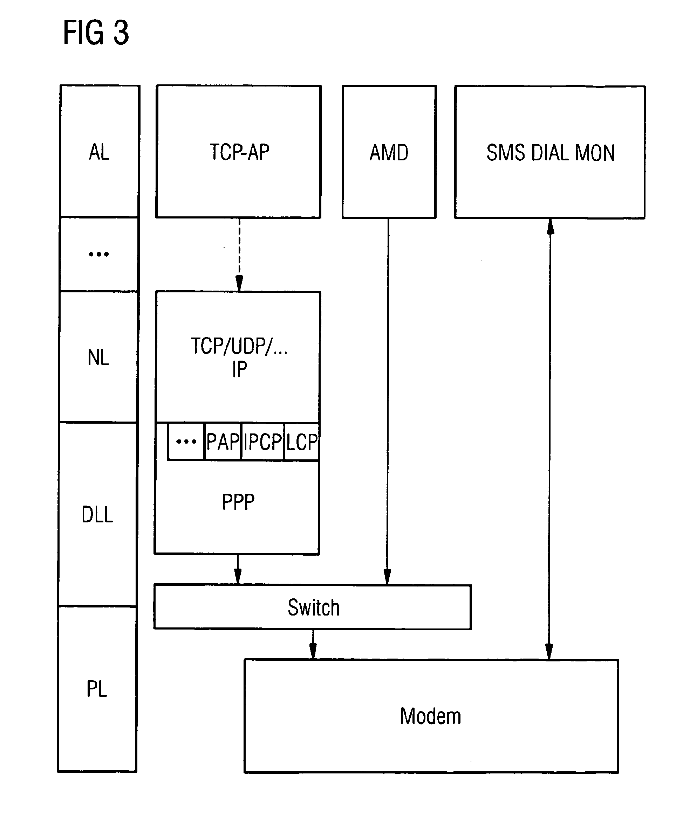

Fig. 3 veranschaulicht das Verfahren unter Verwendung zusätzlicher physikalischer Schnittstellen zwischen der Applikationsschicht und dem Kommunikationsgerät. Zusätzlich zu der in der in Fig. 2 gezeigten Ausführungsform ist ein weiterer direkter Hardwarezugang zwischen einer Applikation zum Versenden von Kurznachrichten SMS, einer Telefonieapplikation DIAL und einem Überwachungsprogramm MON in der Applikationsschicht AL und dem Kommunikationsgerät MODEM in der Physikalischen Schicht PL vorgesehen. Mittels des Programms AMD in der Applikationsschicht wird über die bereits erwähnte Umschaltfunktion SWITCH der Ablauf des PPP-Protokolls und damit der Datenmodus auf dem Gerät MODEM beendet und der Hardwarezugang des Gerätes für eine der Applikationen SMS, DIAL oder MON geöffnet.

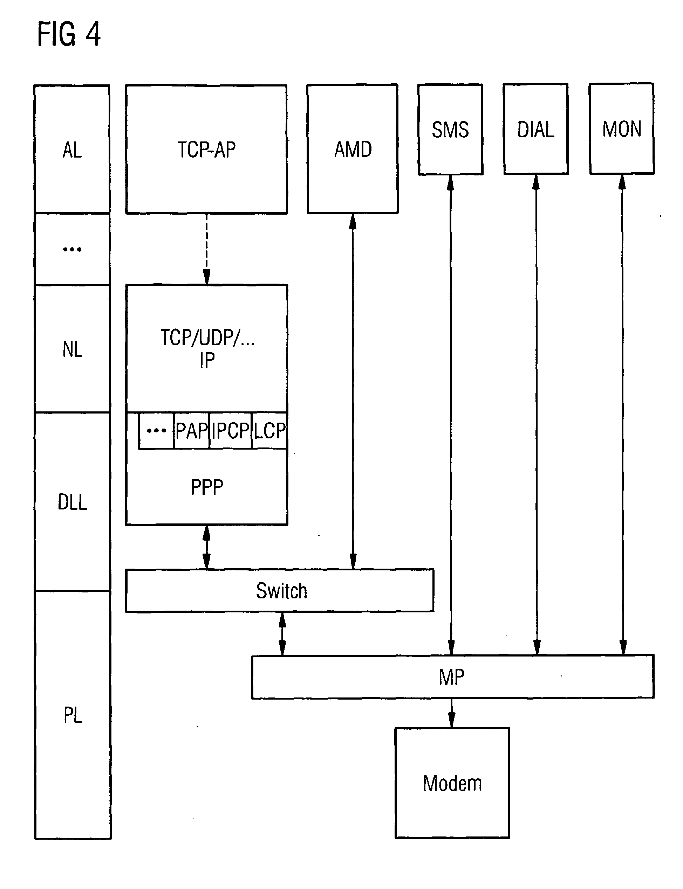

Fig. 4 veranschaulicht ein Modell für ein Verfahren unter. Verwendung eines Multiplexerprotokolls im Schichtenmodell. Bei dieser Ausführungsform ist zusätzlich zu den in den Figuren 3 und 4 gezeigten Komponenten ein Multiplexer MP auf der Ebene der physikalischen Schicht PL implementiert. Dieser führt eine Reihe von logischen Zuordnungen jeweils zwischen den Applikationen SMS, DIAL und MON in der Applikationsschicht und dem Gerät MODEM bereit. Der Multiplexer MP ist bei dieser Ausführungsform hardwareartig ausgebildet. Er wird durch die bereits erwähnte Umschaltfunktion SWITCH bzw. die Applikation AMD aktiviert. Das in Fig. 4 gezeigte Modell des Standes der Technik erfordert demnach ebenso wie bei den vorangegangenen Beispielen ein Umschalten zwischen dem Datenmodus und dem Befehlsmodus am Gerät MODEM.

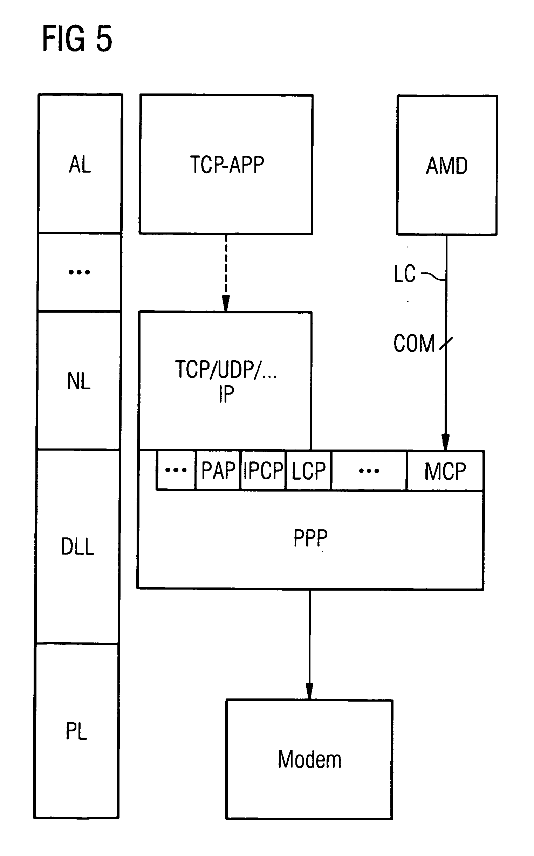

Fig. 5 zeigt anhand des Schichtenmodells eine erste Ausführungsform des erfindungsgemäßen Verfahrens. Das in der Figur gezeigte Schichtenmodell geht von dem Schichtenmodell aus Fig. 2 als Grundlage aus. Im Unterschied zu dem dort aufgeführten Schichtenmodell ist bei der Ausführungsform aus Fig. 5 in den PPP-Rahmen des Point-to-Point-Protokolls ein Gerätesteuerungsprotokoll MCP als integraler Bestandteil eingefügt. Dieses Protokoll MCP öffnet einen logischen Kanal zwischen der Applikation AMD in der Applikationsschicht AL und der Physikalischen Schicht PL d.h. den Hardwarekomponenten des Kommunikationsgerätes MODEM. Der Datenaustausch zwischen der Applikation AMD und den Hardwarekomponenten des Gerätes MODEM wird dadurch als Teil der PPP-Kommunikation ausgeführt. Das Kommunikationsgerät befindet sich somit auch dann im Datenmodus, wenn die Applikation AMD auf das Kommunikationsgerät zugreift, bzw. über das Kommunikationsgerät Daten sendet oder empfängt.

Das von der Applikation AMD erzeugte Steuersignal wird dabei als ein mittels des MCP-Protokolls identifiziertes Paket an das Gerät MODEM übermittelt. Dort wird das Datenpaket separiert und gibt das Steuersignal an das Gerät MODEM aus. Zum Separieren wird insbesondere ein Programm zum Aufteilen und Weiterleiten von Eingaben, ein so genannter Parser, benutzt. Die über PPP erfolgende Datenübertragung stellt damit einen logischen Kanal LC und darüber hinaus eine virtuelle serielle Schnittstelle COM für die Applikation AMD zum Zugriff auf das Kommunikationsgerät dar.

Das Gerätesteuerungsprotokoll kann grundsätzlich auch an der Stelle des LCP-Feldes im PPP-Rahmen angeordnet sein. In diesem Fall markiert dieses Feld den Inhalt des im PPP-Rahmen enthaltenen Nutzdatenfeldes als Steuersignal für das Kommunikationsgerät. Der über das PPP übertragene Datenstrom stellt sich in diesem Fall als eine Paketfolge dar, bei der Pakete zum einen ein herkömmliches LCP-Feld enthalten, und die somit zum normalen Datenstrom gehören, und Paketen, die durch das MCP-Feld markierte Steuersignale an die Hardware des Kommunikationsgerätes transportieren.

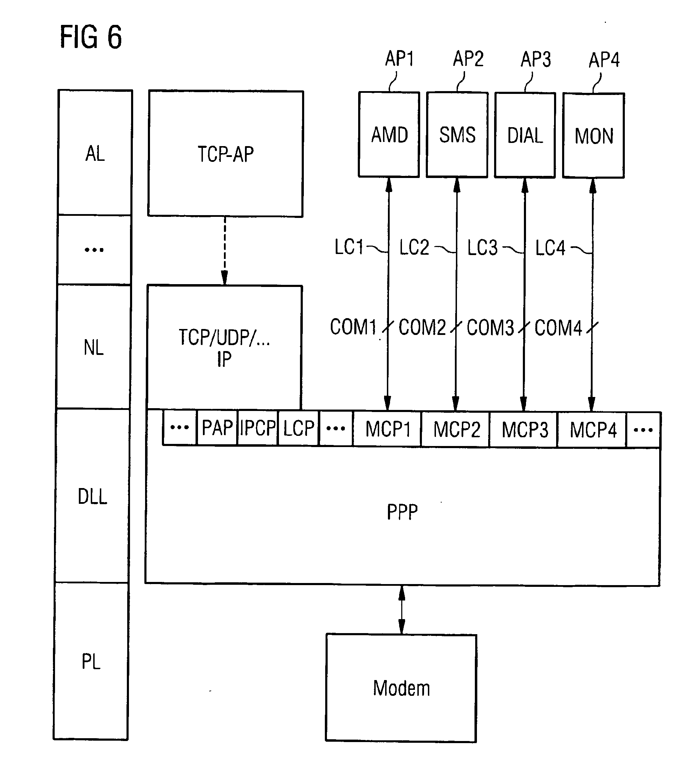

Der PPP-Rahmen ist grundsätzlich durch mehrere, jeweils einzeln identifizierbare und separierbare und somit instanzierbare MCP-Protokolle erweiterbar. Fig. 6 zeigt dies an einem Ausführungsbeispiel. Bei dem hier gezeigten Schichtenmodell ist der PPP-Rahmen um vier verschiedene Gerätesteuerungsprotokolle MCP1, MCP2, MCP3 und MCP4 erweitert. Jedes Gerätesteuerungsprotokoll stellt somit jeweils einen logischen Kanal LC1, LC2, LC3 und LC4 für die Applikationen AMD, SMS, DIAL und MON aus der Applikationsschicht unter Verwendung des PPP-Frames bzw. des PPP bereit, über den diese Anwendungen jeweils auf die Hardware des Gerätes MODEM zugreifen können. Diese logischen Kanäle werden von den Applikationen als virtuelle serielle Schnittstellen COM1 bis COM4 behandelt. Die Implementierung des PPP-Rahmens, vor allem die genaue Zahl der instanzierten MCP-Protokolle, legt damit die Anzahl der an dem Kommunikationsgerät parallel nutzbaren virtuellen seriellen Schnittstellen fest.

Bei dem in Fig. 6 gezeigten Ausführungsbeispiel bedeutet dies außerdem, dass sowohl die über das Protokoll TCP kommunizierende Anwendung TCP-AP, beispielsweise ein Browser, als auch die Applikation AMD, beispielsweise ein Setup-Programm, parallel auf das Gerät MODEM zugreifen können, während für die Applikation SMS, die Applikation DIAL und über die Applikation MON Dienste für Kurznachrichten, Telefonie und Monitoring ebenfalls Geräteressourcen des Kommunikationsgerätes für einen parallelen Zugriff bereit stehen.

Das in Fig. 5 und vor allem in Fig. 6 offenbarte Schichtenmodell ist besonders gut zum Betreiben eines mobilen Gerätes in Form eines Persönlichen Digitalen Assistenten PDA geeignet. Für ein derartiges Gerät ist auch die Bezeichnung Personal Digital Assistant gebräuchlich. Die Applikation TCP-AP ist in diesem Fall in Abhängigkeit vom jeweils vorliegenden Mobilfunknetz ein GPRS- oder UMTS/HSDPA-Datendienst, bzw. eine auf dem PDA installierte Anwendung, beispielsweise ein auf die Ressourcen des PDA angepasster Browser.

Zusätzlich ist auf dem PDA ein wie oben beschriebenes PPP mit einem mindestens um ein Gerätesteuerungsprotokoll MCP erweitertem PPP-Rahmen implementiert. Eine auf dem PDA installierte Anwendung zum Erstellen und Versenden von Kurznachrichten greift über das Gerätesteuerungsprotokoll als Schnittstelle auf die Hardware des PDA zu. Dies wird dadurch realisiert, indem ein Programm zur Zerlegung und Weiterleitung von Eingaben, d.h. ein Parser, für den über das Point-to-Point-Protokoll übertragenen Datenstrom um das Gerätesteuerungsprotokoll erweitert wird. Die dabei gefilterten Nutzdaten werden dann auf die erwähnten virtuellen seriellen Schnittstellen, d.h. Schnittstellen COM1 bis COM4 des PDA gelegt. Die Applikation zum Erstellen und Versenden von Kurznachrichten spricht dabei diese virtellen seriellen Schnittstellen an und behandelt diese wie eine aus dem Stand der Technik bekannte physikalisch gegebene serielle Schnittstelle.

Das erfindungsgemäße Verfahren wurde anhand von Ausführungsbeispielen erläutert. Im Rahmen fachmännischen Handelns sind weitere Ausgestaltungen möglich, die den Bereich des erfindungsgemäßen Grundgedankens nicht verlassen. Weitere Ausführungsformen ergeben sich aus den Unteransprüchen.

### Bezugszeichenliste

- ADD: Adresse
- AMD: Programm zur Verwaltung von Datenverbindungen für Anwendungen
- AL: Applikationsschicht
- CNT: Steuerung
- COM: virtuelle serielle Schnittstelle
- DAT: Nutzdaten
- DIAL: Telefonie
- DLL: Datenverbindungsschicht
- FCS: Prüfsumme
- Flag: Begrenzung
- LCP: Verbindungssteuerungs-Protokoll
- MCP: Gerätesteuerungs-Protokoll
- MODEM: Kommunikationsgerät
- MON: Überwachungsprogramm
- MP: Multiplexer
- NL: Netzwerkschicht
- PL: Physikalische Schicht
- PPP: Point-to-Point-Protokoll
- SMS: Kurznachrichtendienst
- SWITCH: Umschaltfunktion
- TCP-AP: auf TCP/IP beruhende Anwendung

## Patentansprüche

1. Verfahren zum Betreiben eines Kommunikationsgerätes mit einer Datenverbindungsschicht (DLL) und einem Point-to-Point-Protokoll (PPP) mit einem PPP-Rahmen, **gekennzeichnet durch**
ein Betreiben eines in den PPP-Rahmen eingefügten, mittels eines Identifikators separierbaren Gerätesteuerungsprotokolls (MCP) zum Bereitstellen mindestens eines logischen Kanals (LC) zwischen einer Applikationsschicht (AL) und einer physikalischen Schicht (PL) des Kommunikationsgerätes.

2. Verfahren nach Anspruch 1,
**dadurch gekennzeichnet, dass**
mittels des Gerätesteuerungsprotokolls (MCP) eine Instanzierung von mindestens zwei logischen Kanälen (LC1, LC2) zum physikalischen Zugriff von mindestens einer ersten Applikation (AP1) und/oder mindestens einer zweiten Applikation (AP2) aus der Applikationsschicht (AL) auf das Kommunikationsgerät erfolgt.

3. Verfahren nach einem der Ansprüche 1 oder 2,
**dadurch gekennzeichnet, dass**
durch das Gerätesteuerungsprotokoll (MCP) mindestens eine virtuelle serielle Schnittstelle (COM) für eine Applikation bereitgestellt wird.

4. Verfahren nach einem der vorhergehenden Ansprüche,
**dadurch gekennzeichnet, dass**
die mindestens eine erste Applikation (AP1) ein GPRS oder UMTS-Datendienst ist und die mindestens eine zweite Applikation (AP2) ein Dienst zum Übertragen von Sprach- und Kurznachrichten ist, wobei einer der beiden Dienste über die virtuelle serielle Schnittstelle (COM) eine Datenübertragung ausführt.

5. Kommunikationsgerät zum Ausführen von Kommunikationsvorgängen mittels eines Point-to-Point-Protokolls (PPP) mit einem PPP-Rahmen auf der Ebene einer Datenverbindungsschicht,
**gekennzeichnet durch**
mindestens eine virtuelle serielle Schnittstelle (COM), gebildet **durch** ein in den PPP-Rahmen integriertes, mittels eines Identifikators separierbares Gerätesteuerungsprotokoll (MCP) mit mindestens einem logischen Kanal (LC) für einen Zugriff von Applikationen (AP) in einer Applikationsschicht (AL) auf Einheiten einer physikalischen Schicht (PL) des Kommunikationsgerätes.

6. Kommunikationsgerät nach Anspruch 5,
**dadurch gekennzeichnet, dass**
der logische Kanal der jeweiligen virtuellen seriellen Schnittstelle (COM) instanziert ist, wobei über jede virtuelle serielle Schnittstelle ein jeweils unabhängig ausführbarer Zugriff auf die physikalische Schicht (PL) möglich ist.

7. Kommunikationsgerät nach einem der Ansprüche 5 oder 6,
**dadurch gekennzeichnet, dass**
über die mindestens eine virtuelle serielle Schnittstelle eine DialUP-, eine Kurznachrichten-, eine Telefonie- und /oder eine Fax-Applikation ausführbar ist.

8. Kommunikationsgerät nach einem der Ansprüche 5 bis 7,
**dadurch gekennzeichnet, dass**
über die mindestens eine virtuelle serielle Schnittstelle eine Sprach- und/oder eine Kurznachrichten-Applikation ausführbar ist.

9. Kommunikationsgerät nach einem der Ansprüche 5 bis 8,
**dadurch gekennzeichnet, dass**
das Kommunikationsgerät ein drahtgebundenes und/oder drahtloses Modem ist.

10. Kommunikationsgerät nach einem der Ansprüche 5 bis 8,
**dadurch gekennzeichnet, dass**
das Kommunikationsgerät ein Persönlicher Digitaler Assistent (PDA) zur Verwendung in einem GPRS und/oder UMTS/HSDPA-Datendienst ist.

## Claims

1. Method for operating a communication device having a data-link layer (DLL) and a point-to-point protocol (PPP) with a PPP frame,
**characterised by**
an operation of a device control protocol (MCP) which is inserted into the PPP frame and can be separated by means of an identifier for the provision of at least one logic channel (LC) between an application layer (AL) and a physical layer (PL) of the communication device.

2. Method according to claim 1,
**characterised in that**
by means of the device control protocol (MCP) an instancing of at least two logic channels (LC1, LC2) is effected for the physical access of at least one first application (AP1) and/or at least one second application (AP2) from the application layer (AL) to the communication device.

3. Method according to one of claims 1 or 2, **characterised in that** at least one virtual serial interface (COM) is provided by the device control protocol (MCP) for an application.

4. Method according to one of the preceding claims, **characterised in that**
the at least one first application (AP1) is a GPRS or UMTS data service, and the at least one second application (AP2) is a service for the transmission of voice and short messages, wherein one of the two services executes a data transmission by way of the virtual serial interface (COM).

5. A communication device for executing communication processes by means of a point-to-point protocol (PPP) with a PPP frame at the level of a data-link layer, **characterised by**
at least one virtual serial interface (COM), formed by a device control protocol (MCP), which is integrated into the PPP frame and can be separated by means of an identifier, with at least one logic channel (LC) for access of applications (AP) in an application layer (AL) to units of a physical layer (PL) of the communication device.

6. A communication device according to claim 5, **characterised in that**
the logic channel of the respective virtual serial interface (COM) is instanced, wherein access to the physical layer (PL) that can be executed independently in each case is possible by way of each virtual serial interface.

7. A communication device according to one of claims 5 or 6,
**characterised in that** a dial-up-, a short-message-, a telephony- and/or a fax-application can be executed by way of the at least one virtual serial interface.

8. A communication device according to one of claims 5 to 7,
**characterised in that**
a voice- and/or a short-message application can be executed by way of the at least one virtual serial interface.

9. A communication device according to one of claims 5 to 8,
**characterised in that**
the communication device is a wire-bound and/or wireless modem.

10. A communication device according to one of claims 5 to 8,
**characterised in that**
the communication device is a personal digital assistant (PDA) for use in a GPRS and/or UMTS/HSDPA data service.

## Revendications

1. Procédé pour mettre en oeuvre un dispositif de communication au moyen d'une couche de liaison de données (DLL) et d'un protocole point à point (PPP) présentant une trame PPP,
**caractérisé par** la mise en oeuvre d'un protocole de commande de dispositif (MCP), inséré dans la trame PPP et séparable au moyen d'un identificateur, pour la mise à disposition d'au moins un canal logique (LC) entre une couche d'application (AL) et une couche physique (PL) du dispositif de communication.

2. Procédé selon la revendication 1,
**caractérisé en ce que**
une instanciation d'au moins deux canaux logiques (LC1, LC2) pour l'accès physique d'au moins une première application (AP1) et /ou d'au moins une deuxième application (AP2) de la couche d'application (AL) au dispositif de communication est réalisée au moyen d'un protocole de contrôle de dispositif (MCP).

3. Procédé selon la revendication 1 ou 2,
**caractérisé en ce que**
au moins un port série virtuel (COM) est mis à disposition pour une application à travers le protocole de contrôle de périphérique (MCP).

4. Procédé selon l'une quelconque des revendications précédentes, **caractérisé en ce que**
la au moins une première application (AP1) est un service de données GPRS ou UMTS, et la au moins une deuxième application (AP2) est un service de transfert de messages vocaux et de texte, l'un des deux services effectuant une transmission de données via l'interface série virtuel (COM).

5. Dispositif de communication pour l'exécution d'opérations de communication au moyen d'un protocole point à point (PPP) présentant une trame PPP au niveau d'une couche de liaison de données,
**caractérisé par** au moins une interface série virtuelle (COM), formée par un protocole de commande de dispositif (MCP) intégré dans la trame PPP et séparable au moyen d'un identificateur, avec au moins un canal logique (LC) permettant à des applications (AP) dans une couche application (AL) d'accéder à des unités d'une couche physique (PL) du dispositif de communication.

6. Dispositif de communication selon la revendication 5,
**caractérisé en ce que**
le canal logique de l'interface série virtuelle respective (COM) est instancié, de sorte que sur chaque interface série virtuelle, un accès, réalisable de façon indépendante, à la couche physique (PL) est possible.

7. Dispositif de communication selon l'une des revendications 5 ou 6, **caractérisé en ce que**
une application de communication par modem, de message court, de téléphonie et /ou de télécopie est exécutable au moyen de la au moins une interface série virtuelle.

8. Dispositif de communication selon l'une des revendications 5 à 7, **caractérisé en ce que**
une application de la parole et/ou de message court est exécutable au moyen de la au moins une interface série virtuelle.

9. Dispositif de communication selon l'une des revendications 5 à 8, **caractérisé en ce que**
le dispositif de communication est un modem câblé et/ou sans fil.

10. Dispositif de communication selon l'une des revendications 5 à 8, **caractérisé en ce que**
le dispositif de communication est un assistant personnel numérique (PDA) pour utilisation dans le cadre d'un service de données GPRS et/ou UMTS/HSDPA.
